# EUROPEAN PATENT SPECIFICATION

(11) **EP 1 072 801 B1**
(45) Date of publication and mention of the grant of the patent: **02.03.2005**
(21) Application number: 00122271.0
(22) Date of filing: 07.12.1995
(51) Int. Cl.: F16B 13/00

(54) **An anchor member for friable material**
Verankerungselement für sprödes Material
Organe d'ancrage pour matériau friable

(30) Priority: 08.12.1994 FR 9414767
(43) Date of publication of application: 31.01.2001
(62) Divisional of application: 95203368.6
(73) Proprietor: Black & Decker Inc., Newark Delaware 19711 (US)
(72) Inventor: Anquetin, Robert, 91690 Fontaine La Riviere (FR)
(74) Representative: Bell, Ian Stephen

(56) References cited:
- EP-A- 0 501 201
- DE-C- 4 039 831
- FR-A- 2 530 306
- FR-A- 2 642 801
- GB-A- 346 893

## Description

The present invention relates in general to anchor members, commonly called "plugs", and more particularly to an anchor member designed to be inserted in friable material.

Document US-A-3 911 781 discloses an anchor member for friable material which, in conventional manner, comprises a circularly cylindrical body carrying a self-cutting outside thread and provided with an axial bore open at one end to receive a fastener inserted into said member.

The installation of a fastener in a friable material by means of such an anchor member generally takes place in three independent operations.

Firstly a hole is drilled in the friable material by means of a hole-making tool such as drill. Thereafter the anchor member is inserted in the previously prepared hole so that its self-cutting outside thread engages in the friable material. Finally, the threaded fastener is screwed into the anchor member that has been inserted in the friable material.

Another anchor member provided with a self-cutting outside thread is also known in the prior art, that anchor member being suitable for threading on a plane hole-making blade for the purpose of being installed in a friable material.

In order to insert such an anchor member in a friable material, said material is drilled with the plane hole-making blade being driven in rotation and carrying said member. The tip of the hole-making blade forms a hole in the friable material in which said anchor member anchors itself.

However, the hole made by that hole-making blade is not even. In addition, when the density or hardness of the friable material is slightly greater than average, the plane hole-making blade has difficulties piercing it.

Furthermore document EP-A-501 201 discloses an anchor member according to the preamble of claim 1.

The present invention proposes an improved, novel type of anchor member that is of simple design, and that fits on a drill bit enabling well-calibrated holes to be made in any type of friable material.

More particularly, the anchor member of the invention comprises a hollow body substantially in the shape of an elongate body of revolution that is open at both ends, the body being provided with a self-cutting outside thread suitable for anchoring it to a friable material, wherein the anchor member includes anchor grooves for co-operating with longitudinally extended grooves of a drill bit when said drill bit is inserted and passes through said hollow body to enable a hole making tip of the drill bit to project from an inner end of the hollow body, wherein said anchor grooves are formed so as to extend in a substantially longitudinal direction along an inner channel of the hollow body and extend from an inlet region adjacent to an outer end of the hollow body substantially the whole length of the hollow body to the inner end of said body, characterised in that said anchor grooves comprise helical grooves for co-operating with helical grooves of a twist drill bit to ensure that the anchor member rotates together with the twist drill bit.

Furthermore, the anchor member must be secured to the drill bit in such a manner as to ensure said anchor member is properly rotated, and the drill bit must be compatible with standard hole-making tools.

The present invention proposes the following embodiment of an anchor member in order to resolve those technical problems.

In this embodiment, said means for securing the anchor member of the invention with the drill bit comprise helical grooves formed in the inside wall of said hollow body and suitable for co-operating with the helical grooves of a twist drill bit.

The following description made with reference to the accompanying drawings given as non-limiting examples, makes it clear what the invention consists in and how it can be performed.

In the accompanying drawings:
Figure 1a is a diagrammatic perspective view of a first embodiment of an anchor member of the invention;
Figure 1b is a partially cutaway perspective view of the Figure 1a anchor member;
Figure 2 is a view of the Figure 1a anchor member seen along arrow A;
Figure 3 is a diagrammatic perspective of the hole-making tool used with the Figure 1a anchor-member;
Figures 4a to 4e show different steps in implementing the Figure 1a anchor member to fix a fastener in a friable material; and

As a preliminary point, it should be observed that from one figure to another, elements or portions that are identical or similar have been designated wherever possible by the same reference symbols, and they are not described each time.

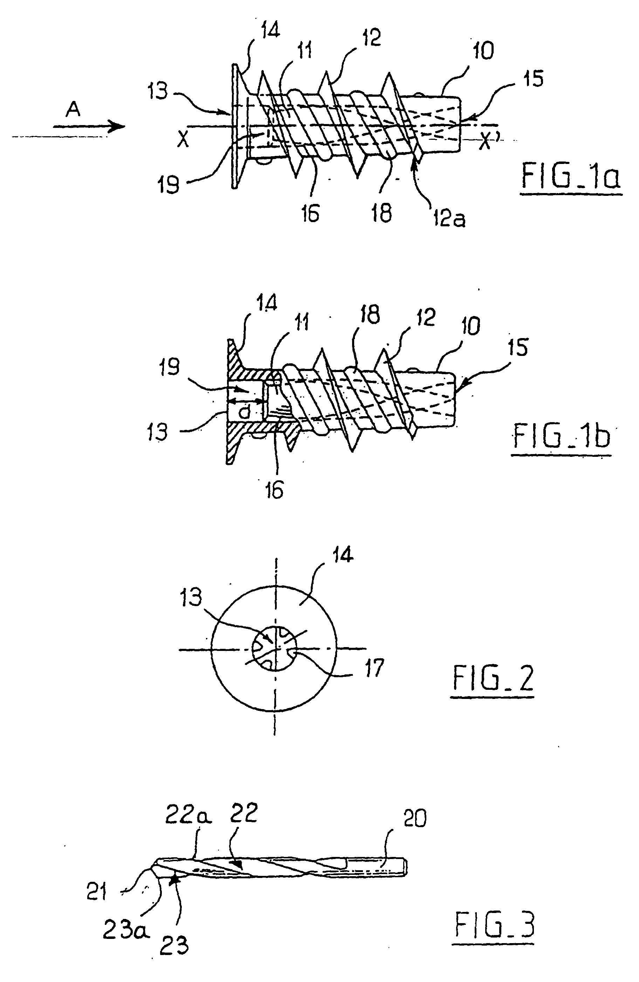

Figures 1a and 1b show an anchor member designed to be inserted in a friable material.

The anchor member comprises a hollow body 10 that is elongate along an axis X-X'. The body 10 has a conical outside surface and an axial passage 11 that is substantially circularly cylindrical. The body 10 is open at both ends 13 and 15. At a first end 13, it includes in conventional manner a collar 14 which is conical in shape and extends radially from said hollow body, having a plane thrust face around the opening of said hollow body. The conical outside surface of the hollow body 10 carries a self-cutting thread 12 which extends along the major part of the length of said body. This self-cutting thread 12 comprises a pyramid-shaped thread with a sharp edge suitable for anchoring the body 10 within a friable material. In addition; the self-cutting thread 12 has gaps 12a close to the other end 15 of the hollow body 10, which gaps have surfaces that are substantially radially flat for the purpose of performing a cutting operation. On its conical outside surface, the body 10 carries a second thread 18 interposed within the self-cutting thread 12. The second thread 18 comprises a thread of rounded shape suitable for preventing rotation of the body of the anchor member when inserted in the friable material.

The axial passage 11 in the body 10 has helical grooves 16 formed in the inside wall of said body 10. As can be seen in Figure 1b, the helical grooves 16 start from a certain distance d from the end 13 provided with the collar 14 and extend all the way to the other end 15 of said body such that the axial passage 11 includes a cylindrical portion of length d adjacent to the end 13 and forming an inlet 19. The inlet 19 makes it possible to centre a fastener inside said anchor member when inserted in the friable material. The helical grooves 16 are designed to co-operate with the helical grooves 22, 23 of a twist drill bit 20, whose sides 22a, 23a constitute self-cutting edges distributed around the circumference of the hole to be made, said twist drill bit 20 passing through said hollow body 10 so that its hole-making tip 21 projects forwards from said body of the anchor member. The helical grooves 16 of the anchor member serve to ensure that the anchor member rotates together with the twist drill bit 20.

Figure 2 shows that at its end 13 provided with the collar 14, the body 10 of the anchor member includes a set of teeth constituted in this case by four teeth 17 regularly distributed around the opening of said body. Each of the teeth 17 extends radially from the inside wall of the hollow body towards the centre of the opening. The teeth are suitable for fixing the fastener inserted into the body of the anchor member.

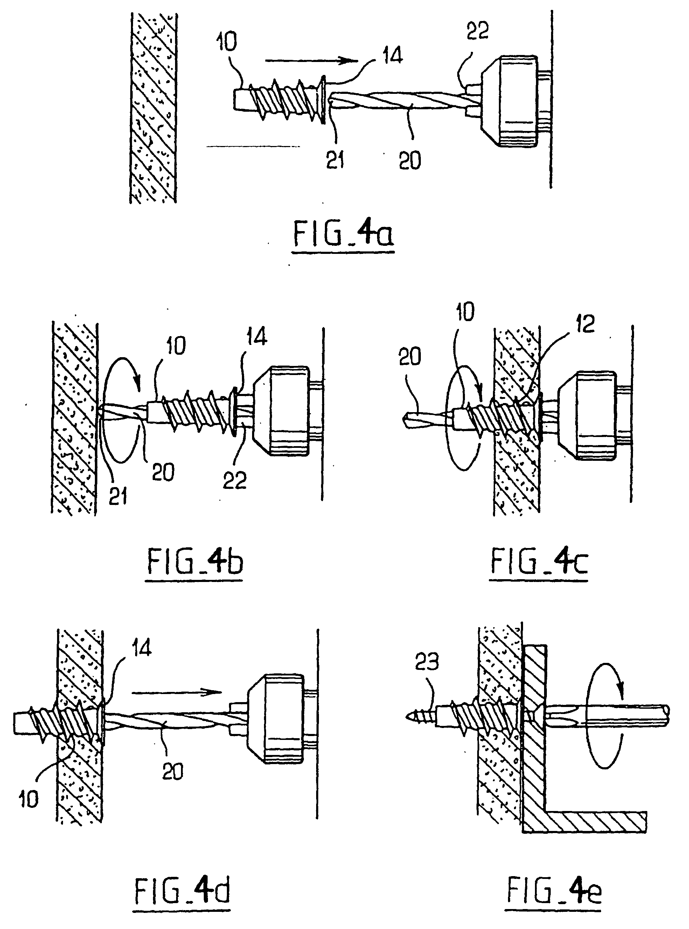

Implementation of the anchor member shown in Figures 1a and 1b is described below with reference to Figures 4a to 4e.

In a first step, the twist drill bit 20 mounted on a drill is threaded inside the body 10 of the anchor member in such a manner that its hole-making tip 21 projects forwards from said body 10. Thus, by virtue of the helical grooves, the anchor member is constrained to rotate with said twist drill bit, with the plane face of the collar 14 bearing against the bit-support means 22 of the drill.

In a second step, the hole-making tip 21 of the twist drill bit 20 is placed against a panel of friable material and the drill is rotated so as to make a hole in the friable material. When the tip 21 of the twist drill bit 20 penetrates into the panel, the self-cutting thread 12 of the anchor member begins to cut complementary tapping in the friable material so as to anchor the body 10 of the anchor member in the calibrated hole made by the twist drill bit in the panel. The single operation of making the hole and installing the anchor member is terminated once the collar 14 of the body of the anchor member comes flush with the outside surface of the panel. It will be observed that the self-cutting thread serves to hold the anchor member axially in the panel while the rounded second thread serves to lock it in place.

In a subsequent step, the twist drill bit is extracted from the anchor member.

Finally, the fastener 23, carrying an object to be fixed, is screwed into said anchor member. In this case the fastener is a screw adapted to the anchor member and the tip of the screw 23 projects from the body of the anchor member. The screw is held in the anchor member by the set of teeth of said member.

Naturally, the present invention is not limited to the embodiments described and shown, and the person skilled in the art could devise any variant coming within the spirit of the invention, provided the invention remains as defined in claim 1.

## Claims

1. An anchor member comprising a hollow body (10) substantially in the shape of an elongate body of revolution that is open at both ends, the body (10) being provided with a self-cutting outside thread (12) suitable for anchoring it to a friable material, wherein the anchor member includes anchor grooves (16) for co-operating with longitudinally extended grooves (22, 23) of a drill bit (20) when said drill bit is inserted and passes through said hollow body (10) to enable a hole making tip (21) of the drill bit to project from an inner end (15) of the hollow body (10), wherein said anchor grooves (16) are formed so as to extend in a substantially longitudinal direction along an inner channel (11) of the hollow body and extend from an inlet region (19) adjacent to an outer end (13) of the hollow body (10) substantially the whole length of the hollow body to the inner end (15) of said body (10), **characterised in that** said anchor grooves (16) comprise helical grooves (16) for co-operating with helical grooves (22, 23) of a twist drill bit (20) to ensure that the anchor member rotates together with the twist drill bit (20).

2. An anchor member as claimed in claim 1, **characterised in that** said hollow body (10) includes an additional thread (18) on its outer surface interposed within the self-cutting thread (12) and suitable for preventing rotation of the anchor member when inserted in the friable material.

3. An anchor member according to any either of the preceding claims, **characterised in that** said hollow body (10) includes a set of teeth (17) at one end for fixing a fastener engaged in said hollow body (10) and projecting forwards from said hollow body (10).

4. An anchor member according to any one of the preceding claims, **characterised in that** the self-cutting thread (12) has gaps (12a) close to one end of the elongate hollow body (10), the gaps having surfaces that are substantially radially flat for the purpose of performing a cutting operation.

## Patentansprüche

1. Ankerelement mit einem hohlen Körper (10) im Wesentlichen in der Form eines länglichen Rotationskörpers, der an beiden Enden offen ist und ein zur Verankerung in einem brüchigen Material geeignetes, selbstschneidendes Außengewinde (12) aufweist, wobei das Ankerelement Ankernuten (16) zum Zusammenwirken mit sich länglich erstreckenden Nuten (22, 23) eines Bohrers (20) hat, wenn der Bohrer in den hohlen Körper (10) eingesetzt wird und sich durch ihn erstreckt, so dass eine ein Loch erzeugende Spitze (21) des Bohrers aus einem inneren Ende (15) des hohlen Körpers (10) vorsteht, wobei die Ankernuten (16) so geformt sind, dass sie sich im Wesentlichen in länglicher Richtung entlang einem inneren Kanal (11) des hohlen Körpers erstrekken und sich über im Wesentlichen die gesamte Länge des hohlen Körpers von einem Einlassbereich (19) benachbart zum äußeren Ende (13) des hohlen Körpers (10) bis zum inneren Ende (15) des Körpers (10) erstrecken, **dadurch gekennzeichnet, dass** die Ankernuten (16) wendelförmige Nuten (16) zum Zusammenwirken mit wendelförmigen Nuten (22, 23) eines Spiralbohrers (20) aufweisen, um sicherzustellen, dass sich das Ankerelement zusammen mit dem Spiralbohrer (20) dreht.

2. Ankerelement nach Anspruch 1, **dadurch gekennzeichnet, dass** der hohle Körper (10) auf seiner äußeren Fläche zwischen dem selbstschneidenden Gewinde (12) ein zusätzliches Gewinde (18) aufweist, das geeignet ist, eine Drehung des Ankerelements zu verhindern, wenn dieses in das brüchige Material eingesetzt ist.

3. Ankerelement nach einem der vorhergehenden Ansprüche, **dadurch gekennzeichnet, dass** der hohle Körper (10) an einem Ende einen Satz Zähne (17) zum Befestigen eines in Eingriff mit dem hohlen Körper (10) stehenden und sich vom hohlen Körper (10) nach vorn erstreckenden Befestigungselements aufweist.

4. Ankerelement nach einem der vorhergehenden Ansprüche, **dadurch gekennzeichnet, dass** das selbstschneidende Gewinde (12) nahe einem Ende des länglichen hohlen Körpers (10) Spalten (12a) aufweist, die Flächen zur Durchführung eines Schneidvorgangs haben, die im Wesentlichen radial flach sind.

## Revendications

1. Organe d'ancrage comprenant un corps creux (10) sensiblement sous la forme d'un corps de révolution allongé qui est ouvert aux deux extrémités, le corps (10) étant pourvu d'un filet extérieur (12) auto-taraudant, approprié à son ancrage à un matériau friable, l'organe d'ancrage incluant des rainures d'ancrage (16) destinées à coopérer avec des rainures (22, 23), étendues longitudinalement, d'un foret (20), lorsque ledit foret est inséré et passe à travers ledit corps (10) creux afin de permettre à une pointe de perçage de trou (21) du foret de faire saillie depuis une extrémité intérieure (15) du corps creux (10), lesdites rainures d'ancrage (16) étant formées de manière à s'étendre dans une direction sensiblement longitudinale le long d'un canal intérieur (11) du corps creux et de s'étendre depuis une région (19) d'admission au voisinage d'une extrémité extérieure (13) du corps creux (10), sensiblement sur la longueur entière du corps creux jusqu'à l'extrémité intérieure (15) dudit corps (10), **caractérisé en ce que** lesdites rainures d'ancrage (16) comportent des rainures hélicoïdales (16) destinées à coopérer avec les rainures hélicoïdales (22, 23) d'un foret hélicoïdal (20) afin d'assurer que l'organe d'ancrage soit entraîné en rotation ensemble avec le foret hélicoïdal (20).

2. Organe d'ancrage selon la revendication 1, **caractérisé en ce que** ledit corps creux (10) inclut un filet supplémentaire (18) sur sa surface extérieure, interposé à l'intérieur du filet auto-taraudant (12) et approprié à l'empêchement d'une rotation de l'organe d'ancrage, lorsqu'il est inséré dans le matériau friable.

3. Organe d'ancrage selon l'une ou l'autre des revendications précédentes, **caractérisé en ce que** ledit corps creux (10) inclut, à une extrémité, un ensemble de dents (17) destinées à fixer un élément de fixation en prise dans ledit corps creux (10) et faisant saillie vers l'avant depuis ledit corps creux (10).

4. Organe d'ancrage selon l'une quelconque des revendications précédentes, **caractérisé en ce que** le filet auto-taraudant (12) a des ouvertures (12a) à proximité d'une extrémité du corps creux (10) allongé, les ouvertures ayant des surfaces qui sont sensiblement radialement plates dans le but d'exécuter une opération de coupe.
